# EUROPÄISCHE PATENTSCHRIFT

(11) **EP 2 782 806 B1**
(45) Veröffentlichungstag und Bekanntmachung des Hinweises auf die Patenterteilung: **07.11.2018**
(21) Anmeldenummer: 12810157.3
(22) Anmeldetag: 12.12.2012
(51) Int. Cl.: B61D 35/00

(54) **WASSERAUSLASS FÜR EINE SANITÄRANLAGE EINES SCHIENENFAHRZEUGS**
WATER OUTLET FOR A SANITARY SYSTEM ON A RAIL VEHICLE
EVACUATION D'EAU POUR UNE INSTALLATION SANITAIRE D'UN VÉHICULE FERROVIAIRE

(30) Priorität: 26.01.2012 DE 102012201146
(43) Veröffentlichungstag der Anmeldung: 01.10.2014
(73) Patentinhaber: Siemens Mobility GmbH, 81739 München (DE)
(72) Erfinder: WIEGNER, Rainer, 32139 Spenge (DE); EHRKE, Patrick, 16845 Voigtsbrügge (DE)
(86) Internationale Anmeldenummer: PCT/EP2012/075151
(87) Internationale Veröffentlichungsnummer: WO 2013/110398

(56) Entgegenhaltungen:
- EP-A2- 2 199 176
- CN-U- 202 032 192
- CN-Y- 201 338 613
- DD-A- 63 067
- DD-A- 93 357
- DD-A1- 61 009
- DD-A1- 271 351
- DD-A1- 271 353
- DD-A7- 287 619
- US-A- 1 610 577

## Beschreibung

Die Erfindung bezieht sich auf einen Wasserauslass für eine Sanitäranlage eines Schienenfahrzeugs, mit einem Wasserauslassrohr und einer Heizeinrichtung zum Frostschutz des Wasserauslassrohres.

In Zügen des Fern- und Nahverkehrs werden den Fahrgästen in der Regel Sanitäranlagen, wie beispielsweise eine WC-Einrichtung, zur Verfügung gestellt. Aufgrund von Hygieneanforderungen sind solche Sanitäranlagen mit einem Handwaschbecken ausgestattet. Die in Zügen eingebauten Nasszellen verfügen dann über ein Handwaschbecken, welches Frischwasser und beispielsweise Seifenflüssigkeit zur Verfügung stellt. Das benutzte, schwach kontaminierte Handwaschwasser, das auch als Grauwasser bezeichnet wird, wird entweder in einen Abwassertank geleitet oder mit Hilfe eines Wasserauslassrohres auf das Gleisbett abgeführt.

Solche sogenannten Grauwasserauslässe befinden sich bei Abführung auf das Gleisbett beispielsweise bei Hochgeschwindigkeits-Bahnfahrzeugen, wie bei Velaro Rus, Velaro CRH 3, oder Velaro-Plattform am Wagenende im Unterflurbereich in der Nähe der Drehgestelle.

Der Unterflurbereich in der Nähe der Drehgestelle ist beispielsweise durch Steinschlag mechanisch besonders hoch belastet. Hierdurch werden sehr häufig eine thermische Isolation des Wasserauslassrohres und eine außen um das Wasserauslassrohr gewickelte Rohrbegleitheizung beschädigt.

Dies begünstigt eine Eisbildung durch abgeführtes Grauwasser und Flugschnee, wodurch sich weitere mechanische Belastungen der thermischen Isolation ergeben. Durch manuelle Enteisung von Grauwasserohröffnungen durch Servicepersonal wird die thermische Isolation im Bereich des Wasserauslasses häufig zusätzlich beschädigt und ggf. teilweise abgerissen.

Die Ursachen wie fehlende thermische Isolation, beschädigte/ausgefallene Heizelemente führen verstärkt bei starkem Frost zum Ausfall der Sanitäranlage, da das Endstück des Wasserauslassrohres zufriert.

Die Patentschrift DD 61009 A offenbart einen elektrisch beheizten Abwasserstutzen mit einer Heizeinrichtung, die in einem Innenraum des Abwasserstutzens angeordnet ist.

Ausgehend hiervon liegt der Erfindung die Aufgabe zu Grunde, einen Wasserauslass für eine Sanitäranlage eines Schienenfahrzeugs der eingangs genannten Art derart weiter zu entwickeln, dass sich ein verbesserter Schutz gegen ein Zufrieren ergibt.

Diese Aufgabe wird bei dem Wasserauslass dadurch gelöst, dass die Heizeinrichtung von außen in ein Endstück des Wasserauslassrohres hineingeführt und damit wenigstens teilweise im Innenraum dieses Endstücks angeordnet ist. Die vorgesehene Heizeinrichtung dient als Wärmequelle, welche eine eiskanalbildende Wirkung verstärkt. Auch bei starken Minustemperaturen kann dieser Effekt weiter aufrecht erhalten werden. Das wenigstens teilweise im Innenraum des Endstücks des Wasserauslassrohres liegende Heizelement hält in diesem Bereich einen Kanal frei, so dass ein zuverlässiger Frostschutz für den Wasserauslass herbeigeführt wird.

Die Heizeinrichtung ist erfindungsgemäß zunächst in einem Bogen aus dem Endstück des Wasserauslassrohres heraus und anschließend außen entlang des Endstücks geführt. In dieser Weise lässt sich eine günstige Montage für die Heizeinrichtung und auch deren elektrischen Anschluss verwirklichen.

Die Heizeinrichtung ist bevorzugt bandförmig ausgebildet und im Bereich des Endstückes in einem Rohr geführt. Eine bandförmige Heizeinrichtung ist grundsätzlich flexibel einsetzbar. Ihre Führung in einem Rohr ermöglicht es, die Heizeinrichtung wenigstens teilweise im Innenraum des Endstücks des Wasserauslassrohres anzuordnen, um den gewünschten Frostschutzzweck zu erzielen.

Das Wasserauslassrohr ist bevorzugt von Isolationsmaterial umhüllt, welches einem Zufrieren des Endstücks des Wasserauslassrohres entgegen wirkt.

Zur weiteren Erhöhung der Frostschutzeigenschaften des Wasserauslassrohres kann das Endstück des Wasserauslassrohres von einem Windfang umfasst sein. Diese Maßnahme bewirkt auch ohne Zusammenwirken mit der in den Innenraum des Endstücks hineingeführten Heizeinrichtung, dass ein zufrierendes Endstück des Wasserauslassrohres erschwert wird. Dabei wirkt der Windfang in der Weise, dass auftretender, kalter Fahrtwind nicht uneingeschränkt auf die Temperatur des Endstücks einwirken kann. Bei entsprechender Materialwahl, beispielsweise Edelstahl, dient der Windfang zudem als Schutz vor Steinschlag.

Bevorzugt ist der Windfang rohrförmig ausgebildet und somit von seiner äußeren Gestaltung an das Endstück des Wasserauslassrohres angepasst. Zwischen dem Windfang und dem Endstück des Wasserauslassrohres befindet sich dann, soweit vorgesehen, das thermische Isolationsmaterial.

Eine günstige Wirkungsweise des Windfangs ergibt sich dann, wenn dieser sich über das Endstück hinaus erstreckt. Dann ergeben sich günstige Eigenschaften dahingehend, dass ein geeigneter Steinschutz verwirklicht und auch eine thermische Einwirkung von kaltem Fahrtwind vermindert wird.

Das Wasserauslassrohr kann außerdem mit einem bandförmigen Heizelement umwickelt sein. In dem Fall, wenn sowohl die in den Innenraum des Endstücks hineingeführte Heizeinrichtung als auch das von außen gewickelte bandförmige Heizelement vorgesehen sind, wird sich letzteres nur entlang des Wasserauslassrohres außerhalb des Endstücks befinden.

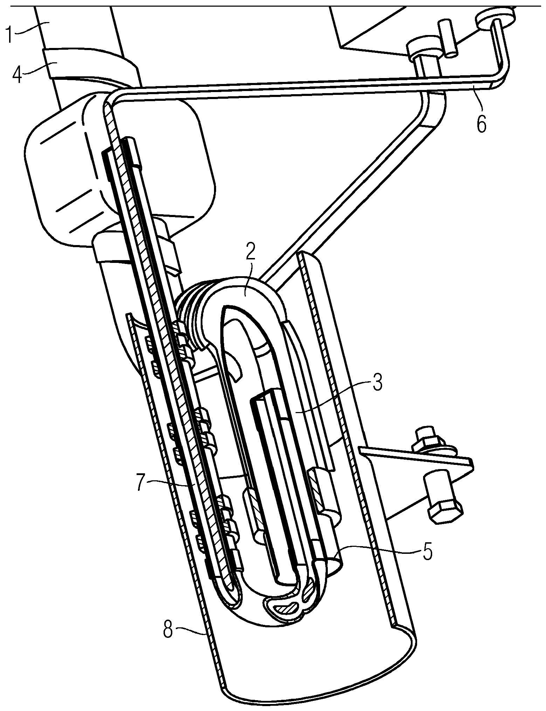

Ein Ausführungsbeispiel der Erfindung wird nachfolgend unter Bezugnahme auf die Zeichnungen noch näher erläutert. Die einzige Figur zeigt eine perspektivische Ansicht, teilweise im Schnitt, eines Wasserauslasses für eine Sanitäranlage eines Schienenfahrzeugs.

Der in der Figur dargestellte Wasserauslass für eine Sanitäranlage eines Schienenfahrzeugs kann beispielsweise an einem Wagenende im Unterflurbereich in der Nähe der Drehgestelle eines Schienenfahrzeugs angeordnet sein und dient zur Abführung von Grauwasser, das bei Benutzung der betreffenden Sanitäranlage, beispielsweise eines Handwaschbeckens, anfällt. Dabei geht ein von einer Wagenseite kommendes Wasserauslassrohr 1 hinter einem Knick 2 in ein gerades Endstück 3 des Wasserauslasses über. Zur Beheizung der Rohrleitung 1 dient eine bandförmige Heizeinrichtung 4, die entlang der Rohrleitung 1 und nach Möglichkeit über den Knick 2 hinaus bis zum Wasserauslass-Rohrende 5 um die Rohrleitung 1 gewickelt ist.

Zudem sind die Rohrleitung 1 sowie das Endstück 3 von in der Figur aus Übersichtlichkeitsgründen nicht dargestelltem Isolationsmaterial umgeben, das sich bis zu einem freien Ende 5 des Endstücks 3 erstreckt.

Zum Frostschutz des Wasserauslasses ist eine weitere elektrische Heizeinrichtung vorgesehen, die ein bandförmiges Heizelement 6 umfasst. Dieses bandförmige Heizelement 6 ist derart geführt, dass es von dem freien Ende 5 des Endstücks 3 aus in den Innenraum des Endstücks 3 hineinragt. Zu diesem Zweck ist das bandförmige Heizelement 6 etwa im Bereich des Endstücks 3 in einem Kupferrohr 7 geführt, welches sich zunächst im Wesentlichen parallel zu dem Endstück 3 erstreckt, im Anschluss daran etwa U-förmig gebogen ist und darauf hin in den Innenraum des Endstücks 3 hinein führt.

Mit Hilfe des teilweise in dem Kupferrohr 7 geführten bandförmigen Heizelementes 6 wird im Inneren des Endstücks 3 ein Eiskanal gebildet, wenn der Wasserauslass mit Frost beaufschlagt ist. Zur Frostsicherung trägt außerdem das bereits oben erwähnte Isolationsmaterial bei, das im Bereich des Endstücks 3 zwischen dem Kupferrohr 7 und dem Endstück 3 selbst angeordnet ist und das Endstück 3 insgesamt ummantelt.

Zur weiteren Erhöhung der Frostsicherheit des Wasserauslasses dient ein beispielsweise aus Stahlrohr hergestellter Windfang 8, dessen Innendurchmesser derart bemessen ist, dass die Anordnung aus bandförmigem Heizelement 6 und Kupferrohr 7 im Bereich des Endstücks 3 innerhalb des Windfangs 8 angeordnet werden kann. Der Windfang 8 bildet sowohl einen Schutz vor kaltem Fahrtwind als auch einen Schlagschutz bezüglich aufgewirbelter Steine oder ähnlichem. Insofern wirkt der Windfang 8 als mechanischer Schutz für die Isolation, mit der das Endstück 3 ummantelt ist, aber auch für das Kupferrohr 7.

Es ist hervorzuheben, dass es sich bei dem Wasserauslass z.B. auch um einen Frischwasserüberlauf handeln kann. Dieser kann mit einem Kondenswasserablauf einer Klimaanlage zusammen geführt sein.

Der Windfang 8 kann insbesondere in Fällen, bei denen sich ein Windschutz für das Endstück 3 bereits durch andere Unterflurkomponenten ergibt, auch ausschließlich als Schutzkragen fungieren.

## Patentansprüche

1. Wasserauslass für eine Sanitäranlage eines Schienenfahrzeugs, mit einem Wasserauslassrohr (1) und einer Heizeinrichtung (6) zum Frostschutz des Wasserauslassrohres (1),
**dadurch gekennzeichnet, dass**
die Heizeinrichtung (6) von außen in ein Endstück (3) des Wasserauslassrohres (1) hineingeführt und damit wenigstens teilweise im Innenraum (3) dieses Endstücks (3) angeordnet ist, wobei die Heizeinrichtung (6) aus dem Endstück (3) heraus zunächst in einem Bogen und anschließend außen entlang des Endstücks (3) geführt ist.

2. Wasserauslass nach Anspruch 1,
**dadurch gekennzeichnet, dass**
die Heizeinrichtung (6) bandförmig ausgebildet und im Bereich des Endstücks (3) in einem Rohr (7) geführt ist.

3. Wasserauslass nach einem der Ansprüche 1 oder 2,
**dadurch gekennzeichnet, dass**
das Wasserauslassrohr (1) von Isolationsmaterial umhüllt ist.

4. Wasserauslass nach einem der Ansprüche 1 bis 3,
**dadurch gekennzeichnet, dass**
das Endstück (3) des Wasserauslassrohres (1) von einem Windfang (8) umfasst ist.

5. Wasserauslass nach Anspruche 4,
**dadurch gekennzeichnet, dass**
der Windfang (8) rohrförmig ausgebildet ist.

6. Wasserauslass nach einem der Ansprüche 4 oder 5,
**dadurch gekennzeichnet, dass**
der Windfang (8) sich über das Endstück (3) hinaus erstreckt.

7. Wasserauslass nach einem der Ansprüche 1 bis 6,
**dadurch gekennzeichnet, dass**
das Wasserauslassrohr (1) mit einem bandförmigen Heizelement (4) bis zum Wasserauslassrohrende 5 umwickelt ist.

## Claims

1. Water outlet for a sanitary system of a rail vehicle, comprising a water outlet pipe (1) and a heating device (6) for protecting the water outlet pipe (1) from frost,
**characterized in that**
the heating device (6) is routed from outside into an end piece (3) of the water outlet pipe (1) and is thus at least partially arranged in the interior (3) of this end piece (3), wherein the heating device (6) is routed out of the end piece (3) initially in a curve and then along the outside of the end piece (3).

2. Water outlet according to Claim 1,
**characterized in that**
the heating device (6) is of strip-shaped design and is routed in a pipe (7) in the region of the end piece (3).

3. Water outlet according to either of Claims 1 and 2,
**characterized in that**
the water outlet pipe (1) is sheathed by insulating material.

4. Water outlet according to one of Claims 1 to 3,
**characterized in that**
the end piece (3) of the water outlet pipe (1) is enclosed by a wind guard (8).

5. Water outlet according to Claim 4,
**characterized in that**
the wind guard (8) is of tubular design.

6. Water outlet according to either of Claims 4 and 5,
**characterized in that**
the wind guard (8) extends beyond the end piece (3).

7. Water outlet according to one of Claims 1 to 6,
**characterized in that**
a strip-shaped heating element (4) is wound around the water outlet pipe (1) up to the water outlet pipe end 5.

## Revendications

1. Evacuation d'eau pour un système sanitaire d'un véhicule ferroviaire, comprenant un tuyau (1) d'évacuation d'eau et un dispositif (6) de chauffage pour empêcher le tuyau (1) d'évacuation d'eau de geler,
**caractérisée en ce que**
le dispositif (6) de chauffage passe de l'extérieur dans un embout (3) du tuyau (1) d'évacuation d'eau et est disposé ainsi, au moins en partie, à l'intérieur (3) de cet embout (3), le dispositif (6) de chauffage sortant de l'embout (3), d'abord en un arceau, et passant ensuite à l'extérieur, le long de l'embout (3).

2. Evacuation d'eau suivant la revendication 1,
**caractérisée en ce que**
le dispositif (6) de chauffage est en forme de bande et, dans la région de l'embout (3), passe dans un tuyau (7).

3. Evacuation d'eau suivant l'une des revendications 1 ou 2,
**caractérisée en ce que**
le tuyau (1) d'évacuation d'eau est gainé de matériau isolant.

4. Evacuation d'eau suivant l'une des revendications 1 à 3,
**caractérisée en ce que**
l'embout (3) du tuyau (1) d'évacuation d'eau est entouré d'un paravent.

5. Evacuation d'eau suivant la revendication 4,
**caractérisée en ce que**
le paravent (8) est tubulaire.

6. Evacuation d'eau suivant l'une des revendications 4 ou 5,
**caractérisée en ce que**
le paravent (8) s'étend au-delà de l'embout (3).

7. Evacuation d'eau suivant l'une des revendications 1 à 6,
**caractérisée en ce qu'**
un élément (4) de chauffage en forme de bande est enroulé sur le tuyau (1) d'évacuation d'eau jusqu'à l'extrémité (5) du tuyau d'évacuation d'eau.
